# EUROPEAN PATENT APPLICATION

(11) **EP 2 742 993 A1**
(43) Date of publication of application: **18.06.2014**
(21) Application number: 12820658.8
(22) Date of filing: 26.07.2012
(51) Int. Cl.: B01D 69/00, B01D 69/10, B01D 69/12, B01D 71/38, B01D 71/40, C01B 3/50, H01M 8/06

(54) **CO2-FACILITATED TRANSPORT MEMBRANE, AND METHOD FOR MANUFACTURING SAME**

(30) Priority: 01.08.2011 JP 2011168458
(71) Applicant: Renaissance Energy Research Corporation, Kyoto 6018116 (JP)
(72) Inventor: OKADA, Osamu, Kyoto-shi Kyoto 601-8116 (JP); KAMIO, Eiji, Kyoto-shi Kyoto 601-8116 (JP); TERAMOTO, Masaaki, Kyoto-shi Kyoto 601-8116 (JP); HANAI, Nobuaki, Kyoto-shi Kyoto 601-8116 (JP); MATSUYAMA, Hideto, Kobe-shi Hyogo 601-8116 (JP)
(74) Representative: Treeby, Philip David William
(86) International application number: PCT/JP2012/069023
(87) International publication number: WO 2013/018659

(57) **Abstract**

CO₂-facilitated transport membrane that can be applied to a CO₂-permeable membrane reactor is stably provided. The CO₂-facilitated transport membrane is provided such that a gel layer (1) composed of a hydrogel membrane is deposited onto a porous membrane (2). More preferably, the gel layer (1) deposited onto a hydrophilic porous membrane (2) is coated with and supported by hydrophobic porous membranes (3) and (4). The gel layer contains a deprotonating agent including an alkali metal element together with glycine. The deprotonating agent is preferably a carbonate or a hydroxide of an alkali metal element, and more preferably, the alkali metal element is potassium, cesium, or rubidium.

## Description

### BACKGROUND OF THE INVENTION

### Field of the Invention

The present invention relates to a CO₂-facilitated transport membrane used to separate carbon dioxide and a production method thereof, and more particularly, relates to a CO₂-facilitated transport membrane capable of separating carbon dioxide, contained in reformed gas mainly composed of hydrogen used for fuel cells, at a high selectivity with respect to hydrogen, and to a CO₂-facilitated transport membrane capable of separating carbon dioxide, contained in waste gas, at a high selectivity with respect to nitrogen.

### Related Background Art

Various studies have previously been conducted on methods for selectively separating carbon dioxide due to the broad range of its application. For example, hydrogen purity can be improved by selectively separating carbon dioxide from reformed gas used for fuel cells. In addition, since carbon dioxide is one of the causes of global warming, its selective separation is expected to slow the progress of global warming by selective separation of carbon dioxide and its underground storage.

When focusing on the hydrogen production process, reforming systems for hydrogen stations currently under development produce hydrogen by reforming hydrocarbon to hydrogen and carbon monoxide (CO) by steam reforming, and then reacting the carbon monoxide with steam to produce hydrogen by a carbon monoxide shift reaction.

One of the causes of impairing reductions in size and shorter startup times of conventional CO shift converters is the need for a large amount of CO shift conversion catalyst due to restrictions on the chemical equilibrium of the CO shift reaction represented by the following Chemical Formula 1. As an example thereof, in contrast to a reforming system for a 50 kW phosphoric acid fuel cell (PAFC) requiring 20 L of reforming catalyst, it requires an amount of CO shift conversion catalyst of 77 L, which is nearly four times greater. This is the major impediment to size reduction and shortened startup times of CO shift converters. Furthermore, the symbol "⇔" in the formula indicates that the reaction is reversible.

(Chemical Formula 1) CO + H₂O ⇔ CO₂ + H₂

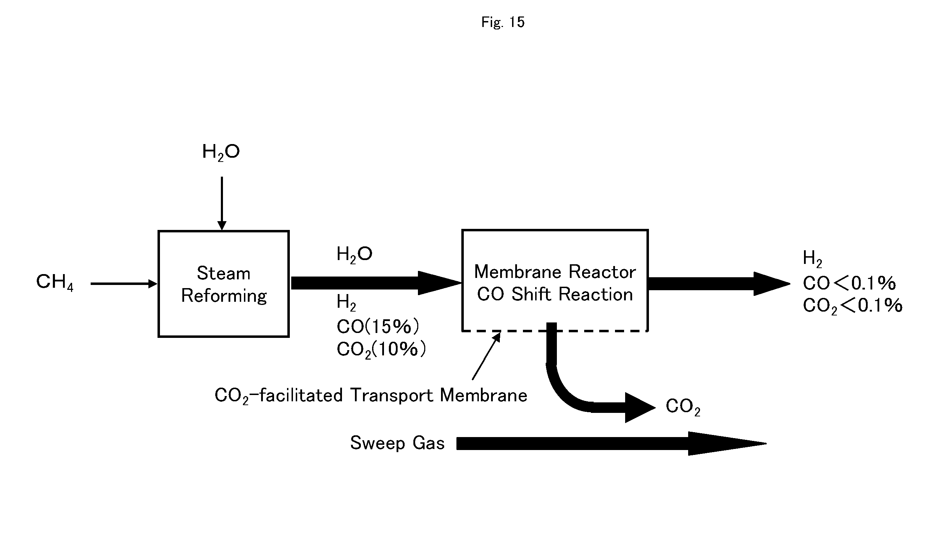

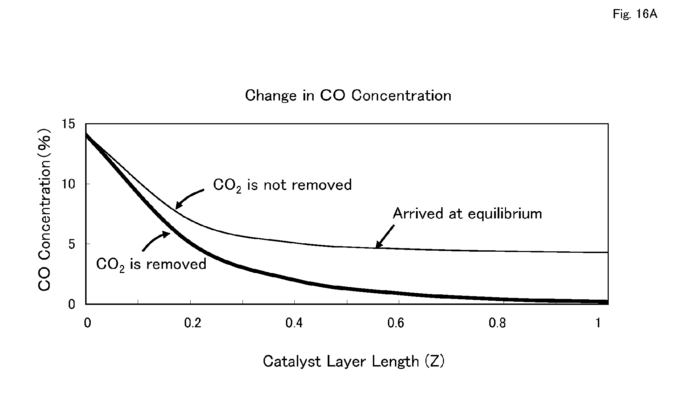

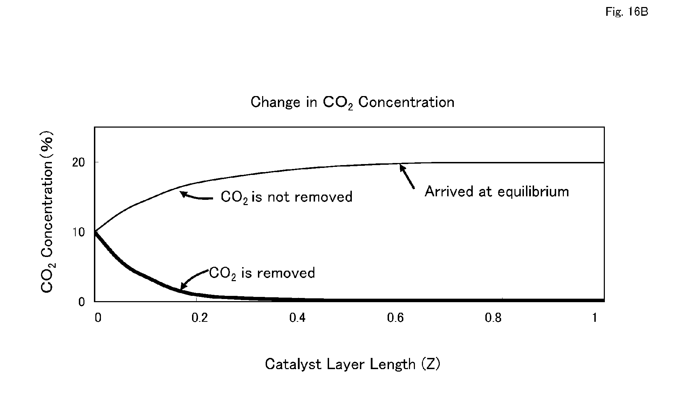

Therefore, by providing a CO₂-facilitated transport membrane that allows the selective permeation of carbon dioxide in a CO shift converter, and efficiently removing carbon dioxide formed in the CO shift reaction as represented on the right side of Chemical Formula 1 above outside the CO shift converter, the chemical equilibrium can be shifted to the hydrogen formation side (right side), and as a result of obtaining a high conversion rate at the same reaction temperature, carbon monoxide and carbon dioxide can be removed at a level beyond the limits imposed by restrictions attributable to equilibrium. Fig. 15 and Fig. 16 provide a schematic representation of this situation. Fig. 16A and Fig. 16B indicate changes in the concentrations of carbon monoxide and carbon dioxide relative to a non-dimensional catalyst layer length Z in the cases of a CO shift converter being provided with a CO₂-facilitated transport membrane and not being provided with that membrane, respectively.

Since the use of a CO shift converter provided with a CO₂-facilitated transport membrane as described above (CO₂-permeable membrane reactor) makes it possible to remove carbon monoxide and carbon dioxide at a level beyond the limits imposed by restrictions attributable to equilibrium, the load on the pressure swing adsorption (PSA) of hydrogen stations can be reduced and the steam/carbon (S/C) ratio of the reforming reaction and CO shift conversion can be lowered, thereby enabling reduced costs and higher efficiency for the hydrogen station overall. In addition, since providing a CO₂-facilitated transport membrane makes it possible to increase the reaction rate of the CO shift reaction (higher space velocity (SV)), the size of reforming systems can be reduced and startup times can be shortened.

On the other hand, when focusing on technologies for separating and recovering CO₂ present in exhaust gas, CO₂ separation and recovery technologies have been applied practically to large-volume CO₂ generation sources in fields such as cement, steel manufacturing, thermoelectric power generation or upstream fields of petroleum and natural gas, and the most commonly employed technology is wet chemical absorption, which is widely used predominantly as a decarbonation process at large-scale chemical plants such as hydrogen production plants or ammonia production plants. Existing chemical absorption methods consist of an absorption step for absorbing CO₂ into an aqueous alkaline solution such as a hot potassium carbonate solution, and a CO₂ recovery step for recovering CO₂ by thermal decomposition of the alkaline carbonate formed. The aqueous alkaline carbonate solution that has left an absorption tower is supplied to a regeneration tower, the aqueous alkaline carbonate solution supplied to the regeneration tower is heated by using steam as a heat source, and CO₂ and its accompanying water are released by thermal decomposition. The hot aqueous alkaline solution that has been removed of CO₂ is again supplied to the absorption tower by a circulating pump.

In this manner, the decarbonation process according to the chemical absorption method is not only complex, but also consumes considerable energy for the steam supplied for use as the heat source of the regeneration tower and motive power of the circulating pump.

Although the use of membranes has been previously examined as an energy-saving technology for this CO₂ separation and recovery, since previously developed CO₂/N₂ separation membranes cannot be used at high temperatures, they are premised on use at normal temperatures, and since steam cannot be used as a sweep gas, the only alternative is to use a vacuum pump, thereby limiting energy-saving effects and impeding practical application as a result of consuming a large amount of electrical power required for the motive power thereof.

A previous example of this type of CO₂-permeable membrane reactor is disclosed in the Patent Document 1 (or Patent Document 2 filed by the same inventors and having the same content) described below.

The reforming system proposed in Patent Documents 1 and 2 provides a CO₂-facilitated transport membrane process useful for purification and water gas shift reactions (CO shift reactions) of reformed gas generated during on-board reforming of hydrocarbon, methanol and other fuels into hydrogen for fuel cell vehicles, and four typical types of processes are indicated in these documents. In the case of using a hydrocarbon (including methane) for the raw material, by selectively removing carbon dioxide using a membrane reactor provided with a CO₂-facilitated transport membrane for the water gas shifter (CO shift converter), the reaction rate of carbon monoxide is increased, the concentration of carbon monoxide is lowered, and the purity of the formed hydrogen is improved. In addition, carbon monoxide and carbon dioxide remaining in the formed hydrogen on the order of several percent are reacted with hydrogen in a methanator and converted to methane to lower their concentrations and prevent decreases in efficiency caused by such factors as fuel cell poisoning.

In Patent Documents 1 and 2, a hydrophilic polymer membrane such as polyvinyl alcohol (PVA), primarily containing a halogenated quaternary ammonium salt ((R)₄N⁺X⁻) for the carbon dioxide carrier, is used as a CO₂-facilitated transport membrane. In addition, Example 6 of Patent Documents 1 and 2 discloses a production method of a CO₂-facilitated transport membrane formed as a composite membrane, composed of a 50% by weight PVA membrane having a thickness of 49 µm containing 50% by weight of tetramethyl ammonium fluoride for the carbon dioxide carrier, and a porous polytetrafluoroethylene (PTFE) polymer that supports the PVA membrane, while Example 7 discloses membrane performance of the CO₂-facilitated transport membrane when processing a mixed gas (25% CO₂, 75% H₂) at a total pressure of 3 atm and temperature of 23°C. The membrane performance is indicated in terms of CO₂ permeance R_{CO2} of 7.2 GPU (=2.4 × 10⁻⁶ mol/(m²·s·kPa)) and CO₂/H₂ selectivity of 19. Here, CO₂/H₂ selectivity is defined as a ratio of CO₂ permeance R_{CO2} divided by H₂ permeance R_{H2}.

In addition, the Patent Document 3 described below discloses a CO₂ absorbent composed of a combination of cesium carbonate and amino acid for use as a CO₂-facilitated transport membrane.

The method used to produce the CO₂-facilitated transport membrane described in Patent Document 3 is as indicated below. First, a commercially available amino acid is added to an aqueous solution of cesium carbonate to a prescribed concentration, followed by stirring well to prepare a mixed aqueous solution. Subsequently, the gel-coated surface of a gel-coated porous PTFE membrane (diameter: 47 mm) is immersed in the prepared mixed aqueous solution for 30 minutes or more and then slowly removed. A silicone membrane is then placed on a sintered metal (to prevent leakage of solution to the permeated side), the 47 mm diameter water-containing gel membrane is placed thereon, and the gel membrane is covered with a cell containing silicone packing to seal the gel membrane. Feed gas is then allowed to flow over the CO₂-facilitated transport membrane produced in this manner at a flow rate of 50 cc/min, a vacuum is drawn on the lower side of the membrane, and the pressure is decreased to about 40 torr.

In Example 4 of Patent Document 3, a CO₂-facilitated transport membrane composed of cesium carbonate and 2,3-diaminopropionic acid hydrochloride at molar concentrations of 4 (mol/kg) each showed the CO₂ permeance of 1.1 (10⁻⁴ cm³ (STP)/cm²·s·cmHg) and the CO₂/N₂ separation factor of 300 at the temperature of 25°C. Furthermore, since CO₂ permeance R_{CO2} is defined as the permeation rate per partial pressure difference, although the value for CO₂ permeance R_{CO2} in Example 4 of Patent Document 3 is calculated to be 110 GPU, data relating to CO₂/H₂ selectivity is not disclosed in the example.

In addition, Patent Document 4 discloses the addition of a crosslinking agent to an aqueous solution of polyvinyl alcohol and amino acid salt, and that a non-porous membrane formed by heating and drying the resulting solution demonstrates CO₂-selective permeability. However, the examples of Patent Document 4 only disclose CO₂ permeability at room temperature (23°C), while there is no disclosure of membrane characteristics at high temperatures of 100°C or higher.

On the other hand, the inventors of the present application have disclosed a CO₂-facilitated transport membrane, obtained by adding a salt of 2,3-diaminopropionic acid (DAPA) to a polyvinyl alcohol-polyacrylic acid salt (PVA/PAA) copolymer gel membrane, in Patent Document 5, and a CO₂-facilitated transport membrane obtained by adding cesium carbonate or rubidium carbonate to a PVA/PAA copolymer salt gel membrane in Patent Document 6, and each is clearly indicated as being provided with high CO₂ permeability of 60 GPU or more as well as high CO₂/H₂ selectivity at a high temperature of 100°C or higher such that the ratio of CO₂ permeance R_{CO2} to H₂ permeance R_{H2} is roughly 100 or more.

### PRIOR ART DOCUMENTS

### PATENT DOCUMENTS

Patent Document 1: Japanese Patent Application (Translation of PCT International Application) Publication No. 2001-511430
Patent Document 2: US Patent No. 6579331
Patent Document 3: Japanese Patent Application Publication No. 2000-229219
Patent Document 4: Japanese Patent No. 3697265
Patent Document 5: Japanese Patent Application Publication No. 2008-36463
Patent Document 6: PCT International Application Publication No. W02009/093666

### SUMMARY OF THE INVENTION

CO₂-facilitated transport membranes have been developed for the purpose of absorbing or removing carbon dioxide causing global warming since the basis function thereof is to selectively separate carbon dioxide. However, in the case of considering the application of CO₂-facilitated transport membranes to CO₂-permeable membrane reactors, a predetermined level of performance is required with respect to working temperature, CO₂ permeance and CO₂/H₂ selectivity. In other words, since the performance of CO shift conversion catalysts used in CO shift reactions tends to decrease as temperature lowers, they are thought to require a minimum working temperature of 100°C. In each of the above-mentioned Patent Documents 1 to 4, membrane performance is measured under temperature conditions of about 25°C, and CO₂-facilitated transport membranes that demonstrate adequate membrane performance under high-temperature conditions of 100°C or higher cannot be said to be disclosed by these documents.

In addition, in order to shift the chemical equilibrium of the CO shift reaction to hydrogen formation side (right side) and achieve a carbon monoxide concentration and carbon dioxide concentration that exceed limitations imposed by restrictions attributable to equilibrium, such as reducing to about 0.1% or less while also increasing the reaction rate of the CO shift reaction (high SV), a predetermined level of CO₂ permeance (which is one of performance indicators of carbon dioxide permeability), for example, 2 × 10⁻⁵ mol/(m²·s·kPa) = about 60 GPU or more, is thought to be required. Moreover, in the case hydrogen generated in the CO shift reaction is discarded to the outside through the CO₂-facilitated transport membrane together with carbon dioxide, a process is additionally required for separating and recovering hydrogen from the waste gas. Although membranes that are permeable to carbon dioxide are also permeable to hydrogen since hydrogen obviously has a smaller molecular size than carbon dioxide, a facilitated transport membrane is required that is capable of selectively transporting only carbon dioxide from the supplied side to the permeated side of the membrane by incorporating a carbon dioxide carrier in the membrane, and CO₂/H₂ selectivity of about 90 to 100 is thought to be required in that case.

On the other hand, even in membrane separation processes using a CO₂-facilitated transport membrane, since CO₂ is absorbed and released through a thin membrane, energy generated during absorption of CO₂ is used as energy for releasing CO₂, thereby essentially resulting in an energy-saving process and considerably reducing the amount of energy consumed in the decarbonation process. However, as was previously described, previously developed CO₂ separation membranes are premised on the use at normal temperatures and are unable to be used at high temperatures, thereby resulting in the problem of limited energy-saving effects. In addition, only performance equivalent to low levels of CO₂/N₂ selectivity (defined as a ratio of CO₂ permeance R_{CO2} divided by N₂ permeance R_{N2}) on the order of several tens is able to be obtained.

With the foregoing in view, an object of the present invention is to stably provide a CO₂-facilitated transport membrane capable of being applied to a CO₂-permeable membrane reactor.

As a result of conducting extensive studies, the inventors of the present invention found that a gel membrane to which glycine (NH₂-CH₂-COOH) has been added demonstrates CO₂ transport properties that are superior to those of the CO₂-facilitated transport membrane obtained by adding DAPA described in Patent Document 5 and the CO₂-facilitated transport membrane obtained by adding cesium carbonate or rubidium carbonate described in Patent Document 6. The present invention is based on the above-mentioned findings.

A CO₂-facilitated transport membrane according to the present invention for achieving the above-mentioned object is a CO₂-facilitated transport membrane having CO₂/H₂ selectivity under a temperature condition of 100°C or higher, and as a first characteristic thereof, a gel layer which contains glycine and a deprotonating agent in a hydrogel membrane is supported on a porous membrane having a heat resistance of 100°C or higher, the deprotonating agent used for preventing protonation of the amino group of the glycine.

According to the CO₂-facilitated transport membrane having the first characteristic described above, as a result of glycine being contained in the gel membrane, the glycine functions as a carbon dioxide carrier that captures carbon dioxide at the interface of the high concentration side of the gel layer and transports the carbon dioxide to an interface of low concentration side of the gel layer, and is able to attain selectivity versus hydrogen (CO₂/H₂) of about 90 to 100 or more and CO₂ permeance of about 2 × 10⁻⁵ mol/(m²·s·kPa) (=60 GPU) or more at a high temperature of 100°C or higher.

Here, since glycine no longer acts as a carbon dioxide carrier if the amino group (NH₂) of the glycine is protonated and is present in the form of NH₃⁺, in the present invention, the gel layer is formed by using a hydrogel membrane which contains a deprotonating agent for preventing protonation of the amino group together with the glycine. The deprotonating agent preferably contains a hydroxide or carbonate of an alkaline metal element. In particular, the alkaline metal element contained in the deprotonating agent is more preferably any of potassium, cesium or rubidium.

In addition, although carbon dioxide is facilitatively transported even in the case water is not present in the membrane, since the permeation rate is typically extremely low, it is essential for water to be present in the membrane in order to obtain a high permeation rate. Thus, by composing the gel membrane with a hydrogel membrane having high water retention, water is able to be retained in the membrane as much as possible even at high temperatures at which water in the gel membrane decreases, thereby making it possible to realize a high level of CO₂ permeance at high temperatures of 100°C or higher.

Furthermore, the hydrogel is a three-dimensional network structure formed by crosslinking a hydrophilic polymer, and has the property of swelling as a result of absorbing water.

In addition, a polyvinyl alcohol-polyacrylic acid salt copolymer gel membrane is preferably used for the hydrogel. Here, a polyvinyl alcohol-polyacrylic acid salt copolymer is also referred to as a polyvinyl alcohol-polyacrylic acid copolymer by persons with ordinary skill in the art.

The CO₂-facilitated transport membrane having the first characteristic described above further has a second characteristic of having CO₂/H₂ selectivity of 300 or more as represented by the ratio of CO₂ permeance to H₂ permeance over at least a specific temperature range within the temperature range from 110°C to 140°C.

In the CO₂-facilitated transport membrane having the second characteristic described above, high CO₂ permeance of about 1000 GPU or more and high CO₂/H₂ selectivity of about 300 or more can be realized at high temperatures of 100°C or higher by forming the gel layer composed of the hydrogel membrane which contains a deprotonating agent containing an alkaline metal element.

Furthermore, in the CO₂-facilitated transport membrane having the first or second characteristic described above, the porous membrane is preferably a hydrophilic porous membrane. As a result of the porous membrane that supports the gel layer being hydrophilic, a gel layer having few defects can be stably produced and a high level of selectivity versus hydrogen can be maintained.

In general, if the porous membrane is hydrophobic, water present in the gel membrane is prevented from penetrating pores in the porous membrane and decreases in membrane performance are prevented at 100°C or lower, and similar effects are thought to be able to be expected even under circumstances in which water in the gel membrane has decreased at 100°C or higher. For this reason, the use of a hydrophobic porous membrane is recommended. However, in the CO₂-facilitated transport membrane of the present embodiment, a hydrophilic porous membrane is used for the reasons indicated below, and thereby a CO₂-facilitated transport membrane can be stably produced that is capable of maintaining a high level of selectivity versus hydrogen with few defects.

When a cast solution composed of an aqueous solution of a polymer that composes the gel membrane and glycine is cast onto the hydrophilic porous membrane, pores in the porous membrane are filled with liquid and the cast solution is further coated onto the surface of the porous membrane. When this cast membrane is dried, in addition to a gel layer being formed on the surface of the porous membrane, since the pores are also filled with the gel layer, it becomes difficult for defects to occur, thereby enhancing the success rate of forming the gel layer.

When considering the proportion of the pores (porosity) and that the pores are not straight vertical to the surface of the membrane but rather are tortuous (tortuosity), the gel layer within the pores creates large resistance to the permeation of gas, resulting in a decrease in permeability as compared with the gel layer on the surface of the porous membrane and a reduction in gas permeance. On the other hand, in the case of casting a cast solution on a hydrophobic porous membrane, since the cast solution is mainly coated only on the surface of the porous membrane, while the pores of the porous membrane are less likely to be filled with liquid but rather be filled with gas, gas permeance in the gel layer on a hydrophobic porous membrane becomes higher for both hydrogen and carbon dioxide in comparison with that in the case of a hydrophilic porous membrane.

However, the gel layer on the membrane surface is more susceptible to the occurrence of defects than the gel layer within the pores, thereby resulting in a decrease in the success rate of gel layer formation. Since hydrogen has a smaller molecular size than carbon dioxide, there is the possibility of the gas permeance of hydrogen becoming higher than that of carbon dioxide at locations where there are minute defects or at locations where gas permeance is locally high. But in the case of the CO₂-facilitated transport membrane of the present invention in which glycine has been added to the gel layer, since the permeation rate of carbon dioxide that permeates by the facilitated transport mechanism is considerably larger than the permeance of hydrogen that permeates by the physical solution-diffusion mechanism, in contrast to carbon dioxide permeance being hardly affected by local defects, hydrogen permeance increases remarkably due to the presence of defects.

As a result, the use of a hydrophilic porous membrane allows the obtaining selectivity versus hydrogen (CO₂/H₂) that is superior to that of the case of using a hydrophobic porous membrane. Thus, from the viewpoint of practical use, the stability and durability of CO₂-facilitated transport membranes are extremely important, and it is advantageous to use a hydrophilic porous membrane having high selectivity versus hydrogen (CO₂/H₂).

Furthermore, with respect to the difference in gas permeance between a hydrophobic porous membrane and a hydrophilic porous membrane, since the large resistance to gas permeation of the gel layer within the pores remains the same even if glycine serving as a carbon dioxide carrier is impregnated after gelling instead of adding to the cast solution in advance, this difference is presumed to occur in the same manner.

The CO₂-facilitated transport membrane having either of the first and second characteristics described above further has a third characteristic of the gel layer deposited onto the hydrophilic porous membrane being coated with and supported by a hydrophobic second porous membrane.

According to this CO₂-facilitated transport membrane having the third characteristic described above, the gel layer supported with the hydrophilic porous membrane is protected by a hydrophobic porous membrane, resulting in an increase of the strength of the CO₂-facilitated transport membrane during use. As a result, in the case of applying the CO₂-facilitated transport membrane to a CO₂-permeable membrane reactor, adequate membrane strength can be secured even if the pressure difference on both sides of the CO₂-facilitated transport membrane (inside and outside the reactor) becomes large (for example, 2 atm or more). Moreover, since the gel layer is coated with a hydrophobic porous membrane, even if steam condenses on the surface of the hydrophobic porous membrane, the water is repelled and prevented from permeating into the gel layer since the porous membrane is hydrophobic. Accordingly, the use of this hydrophobic porous membrane makes it possible to prevent the carbon dioxide carrier in the gel layer from being diluted with water as well as prevent the diluted carbon dioxide carrier from flowing out of the gel layer.

A production method of a CO₂-facilitated transport membrane according to the present invention for achieving the above-mentioned object is a method for producing the CO₂-facilitated transport membrane having the first characteristic described above, comprising:
a step of producing a cast solution composed of an aqueous solution containing a polyvinyl alcohol-polyacrylic acid salt copolymer, a deprotonating agent containing an alkaline metal element and glycine, and a step of producing a gel layer by casting the cast solution onto a porous membrane followed by drying.

According to the production method of a CO₂-facilitated transport membrane as described above, since a cast solution is prepared in advance in which the proportion of carbon dioxide carrier relative to the membrane material (PVA/PAA) has been properly adjusted, optimization of the final mixing ratio of the carbon dioxide carrier in the PVA/PAA gel membrane can be realized easily, thereby making it possible to realize higher membrane performance.

Thus, according to the CO₂-facilitated transport membrane and production method thereof according to the present invention, CO₂ permeance of about 2 × 10⁻⁵ mol/(m²·s·kPa) (=60 GPU) or more and CO₂/H₂ selectivity of about 90 to 100 or more can be realized at working temperatures of 100°C or higher, a CO₂-facilitated transport membrane can be provided that can be applied to a CO₂-permeable membrane reactor, and a reduction in the size of a CO shift converter, shortening of startup time and a faster reaction rate (high SV) can be achieved.

### BRIEF DESCRIPTION OF THE DRAWINGS

Fig. 1 is a cross-sectional view schematically showing the structure in an embodiment of a CO₂-facilitated transport membrane according to the present invention;
Fig. 2 is a flow chart showing a first embodiment of a production method of a CO₂-facilitated transport membrane according to the present invention;
Fig. 3 is a block diagram of an experimental apparatus for evaluating membrane performance of a CO₂-facilitated transport membrane according to the present invention;
Fig. 4 is a drawing showing the facilitative effects on CO₂ permeance resulting from addition of glycine in a CO₂-facilitated transport membrane according to the present invention;
Fig. 5 is a drawing showing changes in H₂ permeance resulting from addition of glycine in a CO₂-facilitated transport membrane according to the present invention;
Fig. 6 is a drawing showing the ameliorative effects on CO₂/H₂ selectivity resulting from the addition of glycine in a CO₂-facilitated transport membrane according to the present invention;
Fig. 7 is a table showing the polymer dependence of CO₂ permeance, H₂ permeance and CO₂/H₂ selectivity in a CO₂-facilitated transport membrane to which glycine has been added according to the present invention;
Fig. 8 is a drawing comparing CO₂ permeance of a CO₂-facilitated transport membrane to which glycine has been added according to the present invention, with membrane performance of a membrane to which DAPA has been added;
Fig. 9 is a drawing comparing CO₂/H₂ selectivity of a CO₂-facilitated transport membrane to which glycine has been added according to the present invention, with membrane performance of a membrane to which DAPA has been added;
Fig. 10 is a drawing comparing CO₂ permeance of a CO₂-facilitated transport membrane to which glycine has been added according to the present invention, with membrane performance of a membrane containing only cesium carbonate;
Fig. 11 is a drawing comparing CO₂/H₂ selectivity of a CO₂-facilitated transport membrane to which glycine has been added according to the present invention, with membrane performance of a membrane containing only cesium carbonate;
Fig. 12 is a drawing showing the facilitative effects on CO₂ permeance resulting from the addition of glycine in a CO₂-facilitated transport membrane according to the present invention;
Fig. 13 is a drawing showing changes in N₂ permeance resulting from addition of glycine in a CO₂-facilitated transport membrane according to the present invention;
Fig. 14 is a drawing showing the ameliorative effects on CO₂/N₂ selectivity resulting from the addition of glycine in a CO₂-facilitated transport membrane according to the present invention;
Fig. 15 is a drawing showing the flow of various gases in a CO shift converter provided with a CO₂-facilitated transport membrane; and
Fig. 16A is a drawing comparing changes in various concentrations of carbon monoxide versus dimensionless catalyst layer length of a CO shift converter in the case of being provided with a CO₂-facilitated transport membrane and not being facilitated therewith.
Fig. 16B is a drawing comparing changes in various concentrations of carbon dioxide versus dimensionless catalyst layer length of a CO shift converter in the case of being provided with a CO₂-facilitated transport membrane and not being facilitated therewith.

### DESCRIPTION OF THE PREFERRED EMBODIMENTS

The following provides an explanation of embodiments of the CO₂-facilitated transport membrane and production method thereof according to the present invention (to be referred to as the "membrane of the present invention" and "method of the present invention") based on the drawings.

The membrane of the present invention is a CO₂-facilitated transport membrane containing a carbon dioxide carrier in a gel membrane containing water that can be applied to a CO₂-permeable membrane reactor having high carbon dioxide permeability and CO₂/H₂ selectivity at a working temperature of 100°C or higher. Moreover, the membrane of the present invention uses a hydrophilic porous membrane as a supporting membrane that supports a gel membrane containing a carbon dioxide carrier in order to stably realize high CO₂/H₂ selectivity.

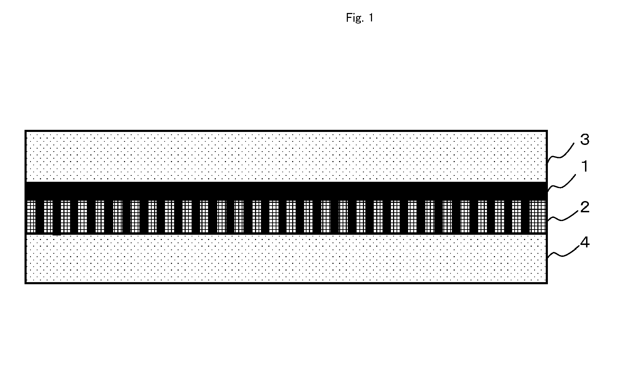

More specifically, the membrane of the present invention uses a polyvinyl alcohol-polyacrylic acid (PVA/PAA) salt copolymer for the membrane material, and uses the simplest amino acid, glycine, for the carbon dioxide carrier. As schematically shown in Fig. 1, the membrane of the present invention is composed of a three-layer structure in which a hydrophilic porous membrane 2 deposited with a PVA/PAA gel membrane 1 containing glycine for the carbon dioxide carrier is sandwiched between two hydrophobic porous membranes 3 and 4. In the following explanation, the gel membrane 1 containing glycine is suitably referred to as a "carrier-containing gel membrane" in order to distinguish it from a gel membrane not containing a carbon dioxide carrier and the membrane of the present invention having a structure provided with two hydrophobic porous membranes.

The glycine (NH₂-CH₂-COOH) serving as the carbon dioxide carrier dissociates in the form of [NH₃⁺-CH₂-COO⁻] when dissolved in water. However, carbon dioxide reacts with free NH₂ but does not react with NH₃⁺. Consequently, in the case of using glycine as a carbon dioxide carrier, it is necessary to convert NH₃⁺ to NH₂ by adding at least an equivalent amount of base to a cast solution to be described hereinafter dissolving glycine as a carbon dioxide carrier. The base is only required to be sufficiently basic to remove a proton from protonated NH₃⁺ and convert it to NH₂, and a hydroxide or carbonate of an alkaline metal element can be used preferably. However, differences occur in carbon dioxide permeability and CO₂/H₂ selectivity due to differences among alkaline metal elements, as is indicated in the following examples.

Furthermore, when more than equivalent amount of base is added, the excess base reacts with carbon dioxide to form carbonate as shown in Chemical Formula 2 for the case of CsOH, for example. Although the carbonate functions as a carbon dioxide carrier (see Patent Document 6), as will be subsequently described, the carbon dioxide permeability and CO₂/H₂ selectivity thereof are inferior to those of the membrane of the present invention that uses glycine for the carbon dioxide carrier.

(Chemical Formula 2) CO₂ + CsOH → CsHCO₃ CsHCO₃ + CsOH → Cs₂CO₃ + H₂O

In addition, according to Chemical Formula 2, regardless of whether cesium hydroxide (CsOH) or cesium carbonate (Cs₂CO₃) is used for the deprotonating agent, they are equivalent if the final pH is the same. However, although carbonate ions and hydrogen carbonate ions remain in the carrier-containing gel membrane in the case of using cesium carbonate (Cs₂CO₃), the contribution of these ions to facilitated transport of carbon dioxide is thought to be small. Similarly, the same applies to the use of lithium hydroxide and lithium carbonate, sodium hydroxide and sodium carbonate, potassium hydroxide and potassium carbonate and rubidium hydroxide and rubidium carbonate, respectively.

The hydrophilic porous membrane 2 preferably has heat resistance of 100°C or higher, mechanical strength and adhesion to the carrier-containing gel membrane in addition to hydrophilicity, the porosity thereof is preferably 55% or more and the pore diameter thereof is preferably within the range of 0.1 µm to 1 µm. In the present embodiment, a hydrophilized polytetrafluoroethylene (PTFE) porous membrane is used as a hydrophilic porous membrane that satisfies these conditions.

The hydrophobic porous membranes 3 and 4 preferably have heat resistance of 100°C or higher, mechanical strength and adhesion to the carrier-containing gel membrane in addition to hydrophobicity, the porosity thereof is preferably 55% or more, and the particle diameter thereof is preferably within the range of 0.1 µm to 1 µm. In the present embodiment, a non-hydrophilized polytetrafluoroehylene (PTFE) porous membrane is used as a hydrophobic porous film that satisfies these conditions.

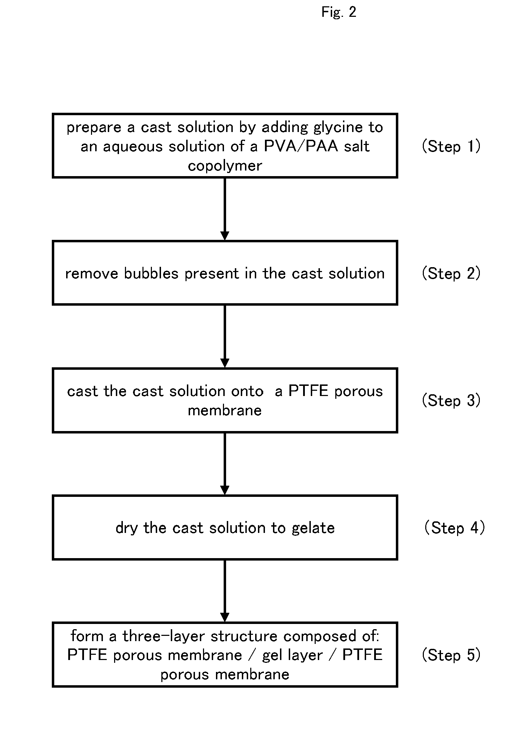

Next, an explanation is provided of an embodiment of the production method of the membrane of the present invention (method of the present invention) with reference to Fig. 2.

First, a cast solution is prepared composed of an aqueous solution containing a PVA/PAA salt copolymer and glycine (Step 1). More specifically, 2 g of the PVA/PAA salt copolymer (such as SS Gel manufactured by Sumitomo Seika Chemicals Co., Ltd.) are added to 80 g of water followed by stirring for 3 days or more at room temperature, further adding 0.366 g of glycine and a deprotonating agent containing various types of alkaline metal elements in equivalent amounts to the glycine to 10 g of the resulting solution, and stirring until they dissolved to obtain a cast solution.

Next, the cast solution obtained in Step 1 is subjected to centrifugal separation (30 minutes at a rotating speed of 5000 rpm) to remove bubbles present in the cast solution (Step 2).

Next, the cast solution obtained in Step 2 is cast with an applicator onto the surface of the hydrophilic PTFE porous membrane side of a layered porous membrane obtained by laminating two layers consisting of the hydrophilic PTFE porous membrane (such as H010A142C manufactured by Advantec Co., Ltd., membrane thickness: 35 µm, pore diameter: 0.1 µm, porosity: 70%) and a hydrophobic PTFE porous membrane (such as Fluoropore FP-010 manufactured by Sumitomo Electric Fine Polymer, Inc., membrane thickness: 60 µm, pore diameter: 0.1 µm, porosity: 55%) (Step 3). Furthermore, the cast thickness of the samples in the examples to be subsequently described is 500 µm. Here, although the cast solution permeates into the pores of the hydrophilic PTFE porous membrane, permeation is interrupted at the boundary surface of the hydrophobic PTFE porous membrane, the cast solution does not permeate to the opposite side of the layered membrane film and is not present on the hydrophobic PTFE porous membrane side of the layered porous membrane, thereby facilitating handling.

Next, the cast hydrophilic PTFE porous membrane is air-dried for about a half day at room temperature so that the cast solution gels to form a gel layer (Step 4). In Step 3 of the method of the present invention, since the cast solution is cast onto the surface of the hydrophilic PTFE porous membrane side of the layered porous membrane, and the gel layer is formed in Step 4 not only on the surface of the hydrophilic PTFE porous membrane (cast surface) but also in the pores by filling the pores, there is less susceptibility to the occurrence of defects (microdefects such as pinholes), and the success rate of forming the gel layer increases. Furthermore, the air-dried PTFE porous membrane is preferably further thermally crosslinked for 2 hours at a temperature of about 120°C in Step 4. Furthermore, thermal crosslinking is carried out on all samples of the examples and comparative examples to be subsequently described.

Next, the same hydrophobic PTFE porous membrane as the hydrophobic PTFE porous membrane of the layered porous membrane used in Step 3 is layered onto the gel layer side on the surface of the hydrophilic PTFE porous membrane obtained in Step 4 to obtain a three-layer structure consisting of a hydrophobic PTFE porous membrane, the gel layer (carrier-containing gel membrane deposited on the hydrophilic PTFE porous membrane) and a hydrophobic PTFE porous membrane in that order as schematically shown in Fig. 1 (Step 5). Furthermore, the state in which the carrier-containing gel membrane 1 fills the pores of the hydrophilic PTFE porous membrane 2 is schematically depicted in the form of straight lines in Fig. 1.

As has been described above, the membrane of the present invention produced by going through Steps 1 to 5 is able to realize a level of membrane performance enabling application to a CO₂-permeable membrane reactor, or in other words, a working temperature of 100°C, CO₂ permeance of about 2 × 10⁻⁵ mol/(m²·s·kPa) (=60 GPU) or more and CO₂/H₂ selectivity of about 100 or more.

In addition, as a result of employing a three-layer structure in which a gel layer is sandwiched between hydrophobic PTFE porous membranes, one of the hydrophobic PTFE porous membranes is used in Steps 3 and 4 to support the hydrophilic PTFE porous membrane that supports the carrier-containing gel membrane and prevent permeation of the cast solution, while the other hydrophobic PTFE porous membrane is used to protect the carrier-containing gel membrane from the other side.

Moreover, even if steam condenses on the membrane surface of a hydrophobic PTFE porous membrane, since this PTFE porous membrane is hydrophobic, the water is repelled and prevented from permeating to the carrier-containing gel membrane. Accordingly, the carbon dioxide carrier in the carrier-containing gel membrane can be prevented from being diluted with water, and the diluted carbon dioxide carrier can be prevented from flowing out of the carrier-containing gel membrane by the other hydrophobic PTFE porous membrane.

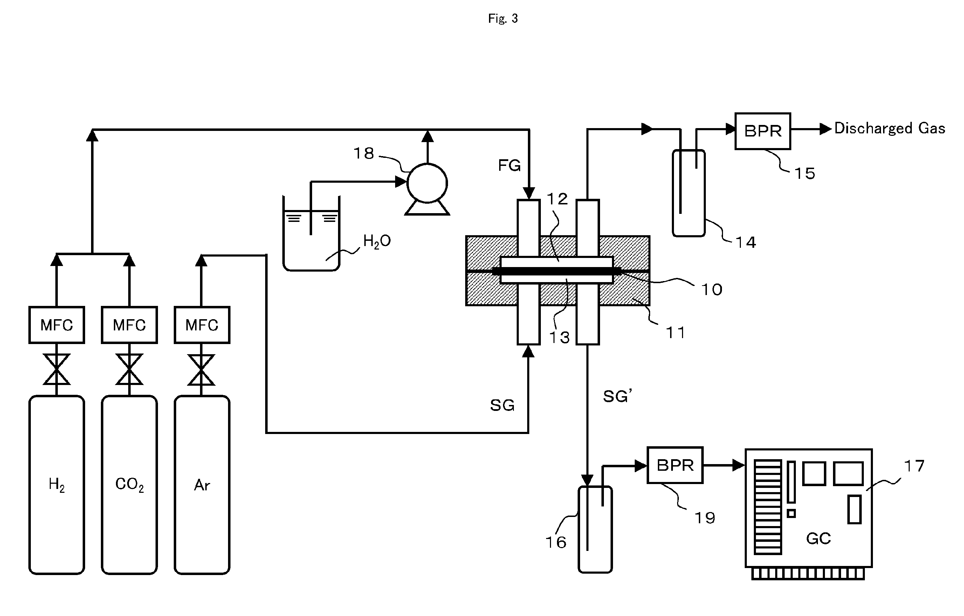

Next, an explanation of the configuration of an experimental apparatus and experimental method for evaluating membrane performance of each of the samples of the examples and comparative examples to be subsequently described is provided with reference to Fig. 3.

As shown in Fig. 3, the CO₂-facilitated transport membrane (membrane of the present invention) 10 is fixed between a feed gas side chamber 12 and a permeation side chamber 13 of a stainless steel in a flow-through type gas permeable cell 11 (membrane surface area: 2.88 cm²), using two fluorine rubber gaskets as sealing materials. Feed gas FG (mixed gas composed of CO₂, H₂ and H₂O) is supplied to the feed gas side chamber 12 at a flow rate of 2.24 × 10⁻² mol/min, and sweep gas SG (Ar gas) is supplied to the permeation side chamber 13 at a flow rate of 8.18 × 10⁻⁴ mol/min. Pressure of the feed gas side chamber 12 is regulated with a back pressure regulator 15 provided downstream from a cooling trap 14 at an intermediate location in the exhaust gas discharge path. Pressure of the permeation side chamber 13 is at atmospheric pressure. Gas composition after steam present in sweep gas SG' discharged from the permeation side chamber 13 has been removed with a cooling trap 16 is quantified with a gas chromatograph 17, CO₂ and H₂ permeances [mol/(m²·s·kPa)] are calculated from the gas composition and the flow rate of Ar in the sweep gas SG, and CO₂/H₂ selectivity is calculated from the ratio thereof. Furthermore, a back pressure regulator 19 is also provided between the cooling trap 16 and the gas chromatograph 17, and the pressure of the permeation side chamber 13 is regulated thereby.

In order to allow the feed gas FG to mimic feed gas in a CO shift converter, the mixed gas composed of CO₂, H₂ and H₂O is adjusted to a molar ratio (mol%) of 3.65% CO₂, 32.85% H₂ and 63.5% H₂O. More specifically, water is pumped into a mixed gas flow composed of 10% CO₂ and 90% H₂ (mol%) (flow rate at 25°C and 1atm: 200 cm³/min, 8.18 × 10⁻³ mol/min) with a peristaltic pump 18 (liquid flow rate: 0.256 cm³/min, 1.42 × 10⁻² mol/min) and water is evaporated by heating to 100°C or higher to prepare a mixed gas having the mixing ratio described above that is supplied to the feed gas side chamber 12.

The sweep gas SG is supplied to maintain the driving force of permeation by lowering the partial pressures of measured gases permeating through the membrane of the present invention (CO₂, H₂) on the permeate side chamber, and a type of gas is used (Ar gas) that differs from the measured gases. More specifically, Ar gas (flow rate at 25°C: 20 cm³/min, 8.18 × 10⁻⁴ mol/min) is supplied to the permeate side chamber 13.

Furthermore, although not shown in the drawings, in order to maintain the working temperature of the sample membranes and the temperatures of feed gas FG and the sweep gas SG at constant temperatures, the experimental apparatus has a preheater that heats the above-mentioned gases, and a flow-through type gas permeation cell that has fixed the sample membranes is arranged inside a constant temperature chamber.

The following provides an explanation of membrane performance of specific examples and comparative examples.

### (Performance Comparison Results 1)

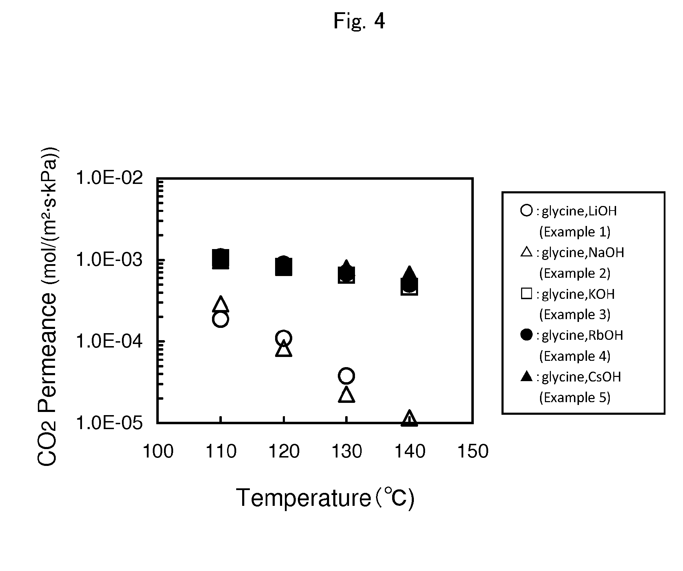

First, in Figs. 4 to 6, the results of measuring CO₂ permeance R_{CO2}, H₂ permeance R_{H2} and CO₂/H₂ selectivity of each sample produced by using a hydrophilic PTFE porous membrane for the porous membrane deposited with the carrier-containing gel membrane and adding a hydroxide of an alkaline metal element in Step 1 are shown within a temperature range of 110°C to 140°C. Furthermore, the pressure of the feed gas FG in the feed gas side chamber 12 is 200 kPa.

Furthermore, a plurality of the samples was prepared according to the previously described production method while changing the alkaline metal element that composes the hydroxide. The mixing ratios of the PVA/PAA copolymer, glycine and alkaline metal hydroxide of each sample measured are as indicated below.

### (Example 1)

First, 0.366 g of glycine and 0.204 g of LiOH·H₂O were added to 10 g of an aqueous PVA/PAA salt copolymer solution in Step 1 for producing a cast solution to obtain a cast solution. The membrane of the present invention containing LiOH prepared in this manner is subsequently referred to as the membrane of the present invention of Example 1.

### (Example 2)

Similarly, 0.366 g of glycine and 0.195 g of NaOH were added to 10 g of an aqueous PVA/PAA salt copolymer solution in Step 1 for producing a cast solution to obtain a cast solution. The membrane of the present invention containing NaOH prepared in this manner is subsequently referred to as the membrane of the present invention of Example 2.

### (Example 3)

Similarly, 0.366 g of glycine and 0.273 g of KOH were added to 10 g of an aqueous PVA/PAA salt copolymer solution in Step 1 for producing a cast solution to obtain a cast solution. The membrane of the present invention containing KOH prepared in this manner is subsequently referred to as the membrane of the present invention of Example 3.

### (Example 4)

Similarly, 0.366 g of glycine and 0.499 g of RbOH were added to 10 g of an aqueous PVA/PAA salt copolymer solution in Step 1 for producing a cast solution to obtain a cast solution. The membrane of the present invention containing RbOH prepared in this manner is subsequently referred to as the membrane of the present invention of Example 4.

### (Example 5)

Similarly, 0.366 g of glycine and 0.731 g of CsOH were added to 10 g of an aqueous PVA/PAA salt copolymer solution in Step 1 for producing a cast solution to obtain a cast solution. The membrane of the present invention containing CsOH prepared in this manner is subsequently referred to as the membrane of the present invention of Example 5.

It can be determined from Fig. 4 that, although CO₂ permeance tends to decrease as temperature rises, the CO₂ permeance of membranes of the present invention containing KOH, RbOH or CsOH (Examples 3 to 5) demonstrates only slight temperature dependence, and as a result thereof, large CO₂ permeance of 3.33 × 10⁻⁴ mol/(m²·s·kPa) or more, namely about 1000 GPU or more, is realized over the entire temperature range of 110°C to 140°C. On the other hand, in the case of membranes of the present invention containing LiOH or NaOH (Examples 1 and 2), although CO₂ permeance decreases considerably as temperature rises, it was still possible to realize CO₂ permeance of about 2 × 10⁻⁵ mol/(m²·s·kPa) (=60 GPU) or more over a temperature range of 110°C to 130°C.

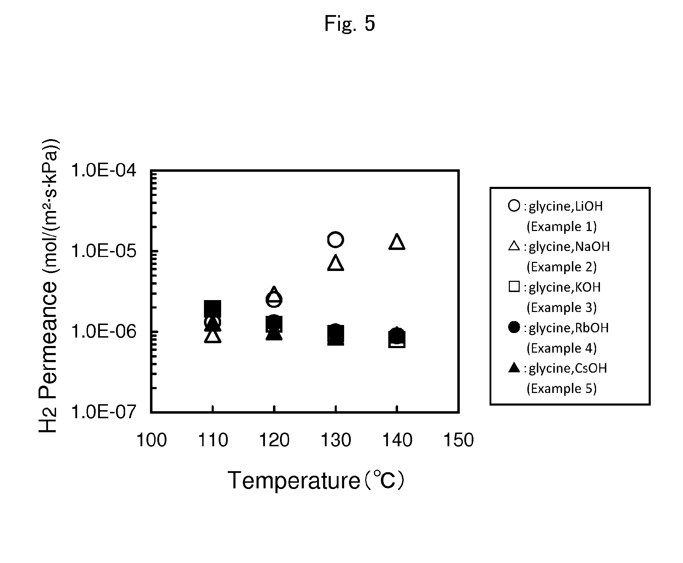

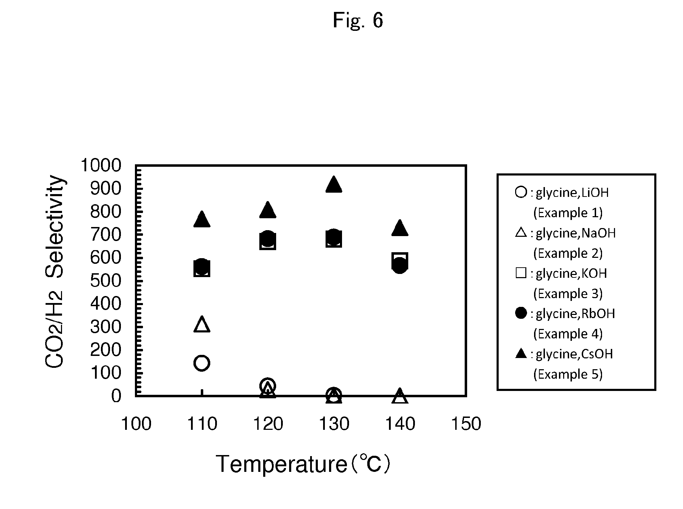

On the basis of Fig. 5, H₂ permeance of membranes of the present invention containing KOH, RbOH or CsOH (Examples 3 to 5) tends to decrease slightly as temperature rises. Consequently, high CO₂/H₂ selectivity of about 300 or higher is able to be realized over the entire temperature range of 110°C to 140°C with the membranes of the present invention containing KOH, RbOH or CsOH a shown in Fig. 6.

On the other hand, on the basis of Fig. 5, H₂ permeance of membranes of the present invention containing LiOH or NaOH (Examples 1 and 2) increases greatly as temperature rises. As a result, CO₂/H₂ selectivity decreases considerably as temperature rises in the membranes containing LiOH or NaOH as shown in Fig. 6. Despite this, high CO₂/H₂ selectivity of about 100 or more is able to be realized over a temperature range in the vicinity of 110°C.

### (Performance Comparison Results 2)

Next, an explanation is provided of the membrane performance of membranes using polyacrylic acid (PAA) salt polymer and polyvinyl alcohol (PVA) as well as polyvinyl alcohol-polyacrylic acid (PVA/PAA) salt copolymer for the membrane material. The PVA/PAA membrane has the same configuration as the membrane of the present invention of Example 5 containing CsOH as previously described.

### (Example 6)

The method used to produce the PAA salt polymer membrane is as described below. First, 2 g of a PAA salt polymer (such as Sanfresh ST-500MPSA manufactured by San-Dia Polymers Ltd.) were added to 80 g of water followed by stirring for 3 days or more at room temperature, adding 0.366 g of glycine and CsOH in an equimolar amount (0.731 g) to the glycine to 10 g of the resulting solution and stirring until they dissolved to obtain a cast solution. The subsequent steps are the same as Steps 2 to 5 of the previously described production method of the membrane of the present invention. The membrane prepared by this method is subsequently referred to as the membrane of the present invention of Example 6.

Moreover, in the present embodiment, performance was compared with that of membranes of the present invention by producing membranes using polyvinyl alcohol (PVA) for the membrane material. Moreover, in the present embodiment, performance was compared with that of membranes of the present invention by preparing two types of PVA membranes having different ratios of water and PVA in the cast solution. The method used to prepare PVA membranes used in the comparative examples is described below.

### (Comparative Example 1)

First, 1 g of PVA is added to 9 g of water followed by stirring until the PVA dissolves at 90°C to obtain a Solution 1. 1.5 g of glycine and 2.995 g of CsOH are then added to 10 g of water and stirred until they dissolve to obtain a Solution 2. Solution 1 and Solution 2 are then mixed and stirred until they became homogeneous to obtain a cast solution. A PVA membrane was then prepared using the same method as Steps 2 to 5 of the production method of the membrane of the present invention as previously described by using this cast solution. The membrane prepared by this method is subsequently referred to as the membrane of Comparative Example 1.

### (Comparative Example 2)

Similarly, 1 g of PVA was added to 9 g of water followed by stirring until the PVA dissolved to obtain a Solution 3. Moreover, 0.75 g of glycine and 1.498 g of CsOH were added to 15.5 g of water and stirred until they dissolved to prepare a Solution 4, 5 g of Solution 3 were sampled and mixed with Solution 4 followed by stirring until they became homogeneous to obtain a cast solution. A PVA membrane was prepared using the same method as Steps 2 to 5 of the production method of the membrane of the present invention as previously described by using this cast solution. The membrane prepared by this method is subsequently referred to as the membrane of Comparative Example 2. The weight ratio of PVA in the cast solution was such that the ratio of H₂O:PVA was 19:1 in the case of Comparative Example 1 and 40:1 in the case of Comparative Example 2.

The weight ratio of the polymer, glycine and CsOH contained in the cast solution was 18:27:55 in the above-mentioned PAA salt polymer membrane (Example 6) and the two types of PVA membranes (Comparative Examples 1 and 2), and was the same as the PVA/PAA salt copolymer membrane of Example 5. Thus, it is possible to examine the effect of differences in polymers on CO₂ separation performance since the weight ratios of the membrane constituents are the same. The PVA/PAA salt copolymer membrane (Example 5) and the PAA salt polymer membrane (Example 6) are hydrogel membranes.

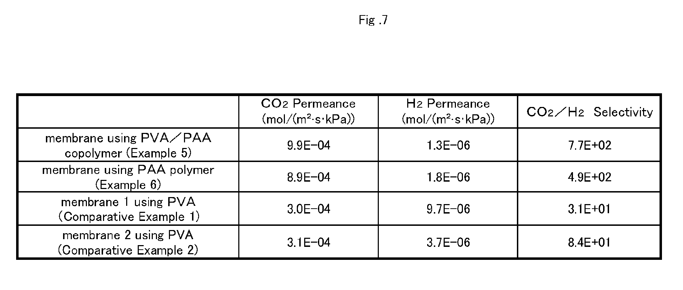

Fig. 7 indicates gas permeation performance at 110°C of the membranes of the present invention of Examples 5 and 6 and the membranes of Comparative Examples 1 and 2 produced using various types of polymers. The flow rates of the feed gas FG and sweep gas SG and other measurement conditions are the same as those shown in Figs. 4 to 6. It can be determined from Fig. 7 that the membranes using a hydrogel (Examples 5 and 6) demonstrate CO₂ permeance and H₂ barrier properties that are superior to the PVA membranes (Comparative Examples 1 and 2). In contrast to CO₂/H₂ selectivity being less than 100 in the membranes of Comparative Examples 1 and 2, as a result of composing the membranes of the present invention using a hydrogel membrane, CO₂/H₂ selectivity of 100 or more can be realized, thereby enabling application to a CO₂-permeable membrane reactor.

### (Performance Comparison Results 3)

The following indicates the results of comparing performance with the membrane of the present invention by preparing a membrane described in Patent Document 5 that contains DAPA for the carbon dioxide carrier.

### (Comparative Example 3)

The method used to prepare the DAPA membrane serving as a comparative example is described below. First, 2 g of a PVA/PAA salt copolymer (such as SS Gel manufactured by Sumitomo Seika Chemicals Co., Ltd.) were added to 80 g of water followed by stirring for 3 days or more at room temperature, adding 0.655 g of DAPA and an amount of CsOH equal to twice the number of moles of the DAPA to 10 g of the resulting solution, and stirring until they dissolved to obtain a cast solution. The subsequent steps are the same as Steps 2 to 5 of the production method of the membrane of the present invention as previously described. Furthermore, the amount of DAPA added is the same as the number of moles of glycine added in the previously described membranes of the present invention, as explained in Example 5. In addition, DAPA has two amino groups in contrast to glycine having one amino group. Consequently, twice the number of moles of CsOH are added to DAPA. The membrane prepared by this method is subsequently referred to as the membrane of Comparative Example 3.

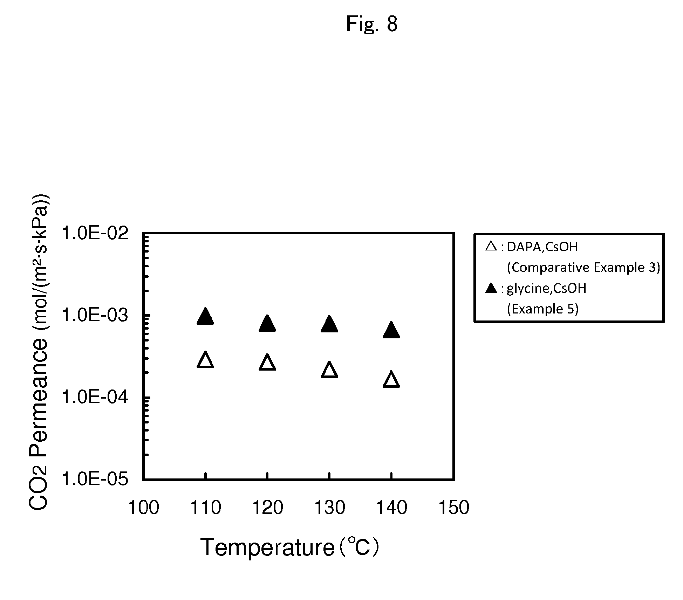

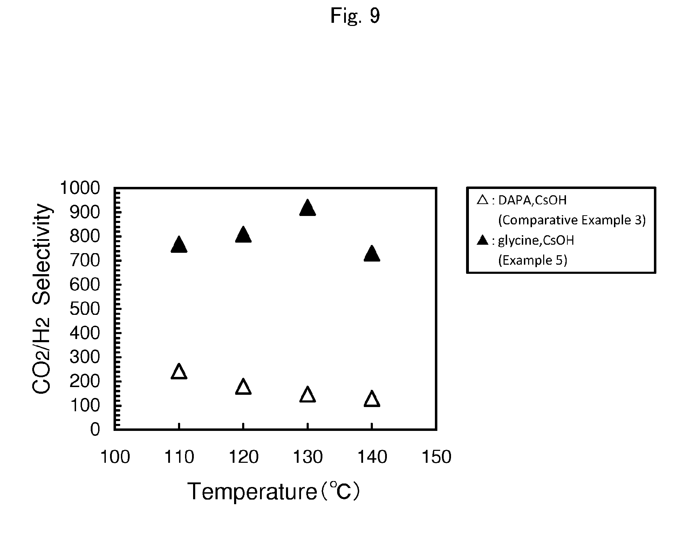

Figs. 8 and 9 indicate the results of measuring CO₂ permeance R_{CO2}, H₂ permeance and CO₂/H₂ selectivity of the membrane of Comparative Example 3 to which DAPA was added and the membrane of the present invention of Example 5 to which glycine was added within a temperature range of 110°C to 140°C. Furthermore, the pressure of the feed gas FG in the feed gas side chamber 12 is 200 kPa. In comparison with the membrane of Comparative Example 3 to which DAPA was added, the membrane of the present invention of Example 5 demonstrates remarkably high values for CO₂ permeance and selectivity versus hydrogen.

Since glycine is less expensive than DAPA, the use of glycine as a carbon dioxide carrier makes it possible to realize a CO₂-facillated transport membrane having superior CO₂ transport properties as well as a high-performance CO₂-permeable membrane reactor at low cost.

### (Performance Comparison Results 4)

The following indicates the results of comparing performance by preparing a membrane that does not contain glycine but only contains cesium carbonate for the carbon dioxide carrier as described in Patent Document 6, and a membrane that contains glycine and cesium carbonate or cesium hydroxide.

### (Example 7)

The method used to prepare the membrane of the present invention containing glycine and cesium carbonate is as described below. First, 2 g of a PVA/PAA salt copolymer (such as SS gel manufactured by Sumitomo Seika Chemicals Co., Ltd.) were added to 80 g of water followed by stirring for 3 days or more at room temperature, adding 0.366 g of glycine and an amount of Cs₂CO₃ equal to half the number of moles of glycine (0.794 g) to 10 g of the resulting solution and stirring until they dissolved to obtain a cast solution. The subsequent steps were the same as Steps 2 to 5 of the production method of the membrane of the present invention as previously described. Furthermore, the reason for making the amount of Cs₂CO₃ added to be equal to half the number of moles of glycine and not equal to the number of moles of glycine was to make the number of moles of Cs equal to the number of moles of glycine. The membrane prepared by this method is subsequently referred to as the membrane of the present invention of Example 7.

### (Comparative Example 4)

In addition, the method used to prepare a membrane containing only cesium carbonate is as described below. First, 2 g of a PVA/PAA salt copolymer (such as SS gel manufactured by Sumitomo Seika Chemicals Co., Ltd.) were added to 80 g of water followed by stirring for 3 days or more at room temperature, adding 1.16 g of Cs₂CO₃ to 10 g of the resulting solution and stirring until it dissolved to obtain a cast solution. The subsequent steps are the same as Steps 2 to 5 of the production method of the membrane of the present invention as previously described. Furthermore, the amount of Cs₂CO₃ added was made to be the same in weight as the sum of the amounts of glycine and Cs₂CO₃ added in the membrane of the present invention of Example 7 in order to investigate the effect of glycine addition. The membrane prepared by this method is subsequently referred to as the membrane of Comparative Example 4.

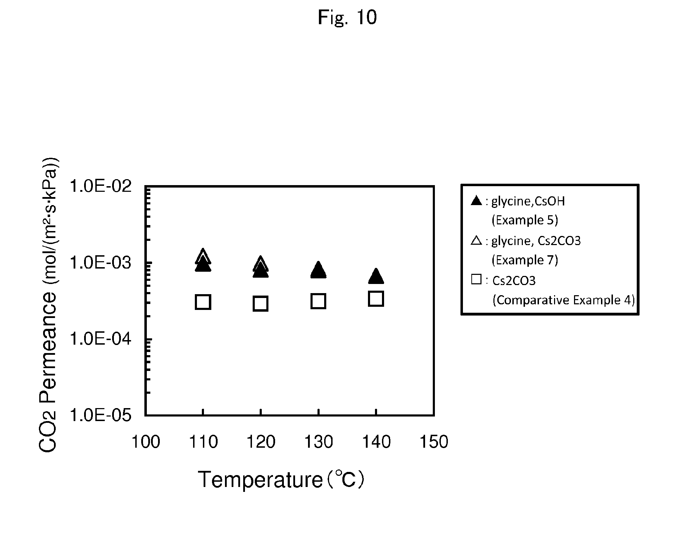

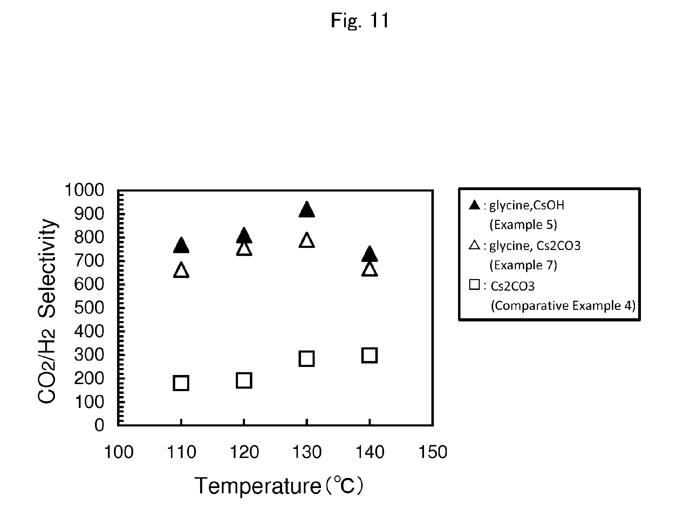

Figs. 10 and 11 indicate the results of measuring CO₂ permeance R_{CO2}, H₂ permeance and CO₂/H₂ selectivity of the membrane of the present invention of Example 5 containing glycine and cesium hydroxide, the membrane of the present invention of Example 7 containing glycine and cesium carbonate, and the membrane of Comparative Example 4 containing only cesium carbonate within a temperature range of 110°C to 140°C. Furthermore, the pressure of the feed gas FG in the feed gas side chamber 12 is 200 kPa.

It can be determined from Figs. 10 and 11 that the membrane of the present invention of Example 5 containing glycine and cesium hydroxide and the membrane of the present invention of Example 7 containing glycine and cesium carbonate have nearly equal levels of performance.

Next, when the membrane of Comparative Example 4 containing only cesium carbonate is compared with the membrane of the present invention of Example 7 containing cesium carbonate along with glycine, the membrane containing glycine therein demonstrates remarkably high values for both CO₂ permeance and selectivity versus hydrogen.

It is understood that in both the membrane of the present invention containing glycine and cesium hydroxide and the membrane of the present invention containing glycine and cesium carbonate, large CO₂ permeance is realized in excess of 1000 GPU (3.33 × 10⁻⁴ mol/(m²·s·kPa) ) as well as extremely high CO₂/H₂ selectivity of about 300 or more within an entire temperature range of 110°C to140°C.

### (Performance Comparison Results 5)

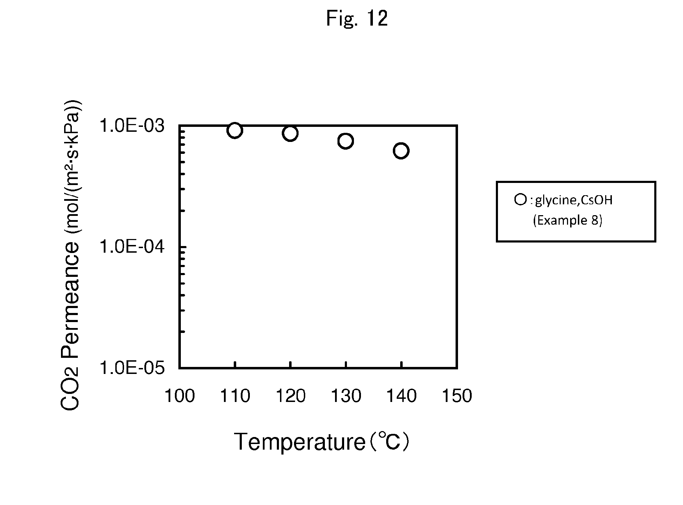

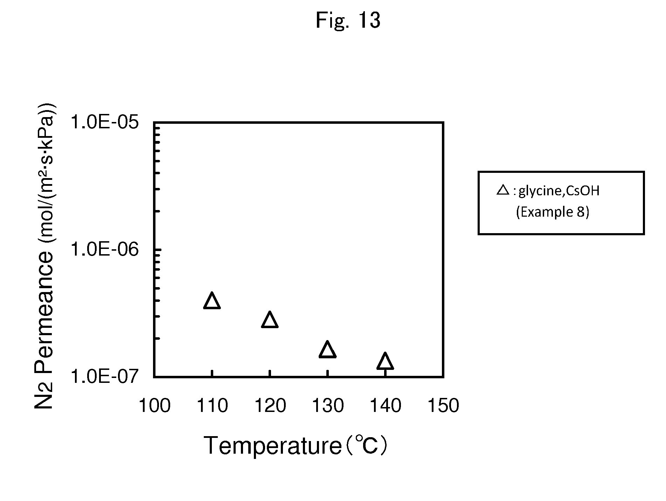

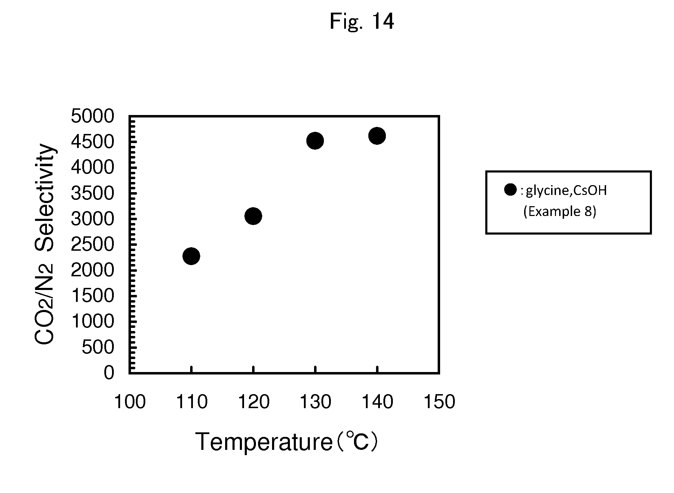

Next, with respect to selectivity versus nitrogen of a membrane of the present invention, Figs. 12 to 14 indicate the results of measuring CO₂ permeance R_{CO2}, N₂ permeance R_{N2} and CO₂/H₂ selectivity for a membrane prepared using the same method as the membrane of the present invention of Example 5 that contains cesium hydroxide (to be referred to as the membrane of the present invention of Example 8) within a temperature range of 110°C to 140°C. Furthermore, the pressure of the feed gas FG in the feed gas side chamber 12 is 200 kPa.

It can be determined from Figs. 12 to 14 that the membrane of the present invention of Example 8 has both high selectivity versus nitrogen as well as high selectivity versus hydrogen. Since nitrogen molecules have a larger molecular size than hydrogen molecules, a membrane having superior selectivity versus hydrogen is naturally predicted to have superior selectivity versus nitrogen. This was confirmed by the results of the present experiment.

According to that described above, the addition of glycine as a carbon dioxide carrier realizes a CO₂-facilitated transport membrane that has remarkably high carbon dioxide permeability and CO₂/H₂ selectivity in comparison with conventional membranes containing DAPA or cesium carbonate at a working temperature of 100°C or higher, and thereby applicable to a CO₂-permeable membrane reactor.

The following provides an explanation of other embodiments of the CO₂-facilitated transport membrane according to the present invention.
(1) Although the membrane of the present invention was prepared by the gelation of a cast solution composed of an aqueous solution containing a PVA/PAA salt copolymer and glycine as a carbon dioxide carrier after casting on a hydrophilic PTFE porous membrane used to support a gel membrane in the above-mentioned embodiment, the membrane of the present invention may also be prepared using a production method other than the production described in the above-mentioned embodiment. For example, the membrane of the present invention may be prepared by impregnating a PVA/PAA salt copolymer gel membrane with glycine after gelation of the cast solution.
(2) Although a three-layer structure composed of a hydrophobic PTFE porous membrane, gel layer (carrier-containing gel membrane deposited on a hydrophilic PTFE porous membrane) and hydrophobic PTFE porous membrane in that order was employed for the membrane of the present invention in the above-mentioned embodiment, the supporting structure of the membrane of the present invention is not necessarily limited to this three-layer structure. For example, a bi-layer structure may also be employed consisting of a hydrophobic PTFE porous membrane and a gel layer (carrier-containing gel membrane deposited on a hydrophilic PTFE porous membrane). In addition, although the case of the gel layer being composed of a carrier-containing gel membrane deposited on a hydrophilic PTFE porous membrane was explained in the above-mentioned embodiment, the gel layer may also be deposited on a hydrophobic porous membrane.
(3) In the above-mentioned embodiment, the membrane of the present invention preferably contains an additive for facilitating carbon dioxide permeability in the gel membrane in addition to glycine functioning as a carbon dioxide carrier. In this case, the polymer is present in the carrier-containing gel membrane within the range of about 20% by weight to 80% by weight, glycine is present within the range of about 20% by weight to 80% by weight, and the additive is present within the range of about 0% by weight to 30% by weight based on the total weight of the polymer, glycine and additive in the gel membrane.

The additive is a liquid that has low vapor pressure such as an ionic liquid or oligomer, required to have hydrophilicity, thermal stability, affinity for carbon dioxide and compatibility with the glycine functioning as a carbon dioxide carrier. Chemical substances selected from compounds composed of combinations of the cations and anions indicated below can be used as ionic liquids provided with these properties:
cations: imidazolium compounds having an alkyl group, hydroxyalkyl group, ether group, allyl group or aminoalkyl group as substituents at positions 1 and 3, or quaternary ammonium cations having an alkyl group, hydroxyalkyl group, ether group, allyl group or aminoalkyl group as a substituent; and
anions: chloride ions, bromide ions, tetrafluoroborate ions, nitrate ions, bis(trifluoromethanesulfonyl)imide ions, hexafluorophosphate ions or trifluoromethanesulfonate ions.

In addition, specific examples of these ionic liquids that can be used include 1-allyl-3-ethylimidazolium bromide, 1-ethyl-3-methylimidazolium bromide, 1-(2-hydroxyethyl)-3-methylimidazolium bromide, 1-(2-methoxyethyl)-3-methylimidazolium bromide, 1-octyl-3-methylimidazolium chloride, N,N-diethyl-N-methyl-(2-methoxyethyl)ammonium tetrafluoroborate, 1-ethyl-3-methylimidazolium bis(trifluoromethanesulfonyl)imide, 1-ethyl-3-methylimidazolium bistrifluoromethanesulfonic acid, 1-ethyl-3-methylimidazolium dicyanamide and trihexyltetradecyl phosphonium chloride.

Other than ionic liquids, as examples, chemical substances selected from glycerin, polyglycerol, polyethylene glycol, polypropylene glycol, polyethylene oxide, polyethyleneimine, polyallylamine, polyvinylamine and polyacrylic acid can be used.

As a result of containing the above-mentioned additives in the gel membrane, carbon dioxide permeability is facilitated and high CO₂ permeance can be realized even at high temperatures of 100°C or higher at which the amount of water in the PVA/PAA gel membrane becomes low. When a CO₂-facilitated transport membrane is used in a high-temperature environment of 100°C or higher, although crosslinking of the PVA/PAA gel membrane ought to further progress and inhibit facilitated transport of carbon dioxide by the carbon dioxide carrier resulting in a decrease in carbon dioxide permeability, as a result of containing an additive as described above, progression of crosslinking is suppressed, and therefore the decreases in carbon dioxide permeability caused by use at high temperatures are suppressed. This is thought to be a reason for the high CO₂ permeance.

In addition, the use of a hydrophilic additive enables water to be retained within the membrane as much as possible, thereby facilitating carbon dioxide permeability. In addition, the use of an additive provided with compatibility with the carbon dioxide carrier and affinity for carbon dioxide enables the additive to be uniformly distributed in the membrane together with glycine without inhibiting the facilitated transport of carbon dioxide by glycine serving as the carbon dioxide carrier, thereby facilitating carbon dioxide permeability.
(4) Although the case of applying the membrane of the present invention to a CO₂-permeable membrane reactor is presumed in the above-mentioned embodiment, the membrane of the present invention can also be used for the purpose of selectively separating carbon dioxide in applications other than a CO₂-permeable membrane reactor. Thus, feed gas supplied to the membrane of the present invention is not limited to the mixed gas exemplified in the above-mentioned embodiment.
(5) The mixing ratios of each of the components in the composition of the membrane of the present invention, the dimensions of each portion of the membrane and the like as exemplified in the above-mentioned embodiment are intended to serve as examples for facilitating an understanding of the present invention, and are not intended to limit the present invention to CO₂-facilitated transport membranes having those values.

The CO₂-facilitated transport membrane according to the present invention can be used to separate carbon dioxide, and in particular, can be used as a CO₂-facilitated transport membrane capable of separating carbon dioxide contained in reformed gas, such as that for a fuel cell composed mainly of hydrogen, at a high selectivity versus hydrogen, and is also useful for a CO₂-permeable membrane reactor.

### EXPLANATION OF REFERENCES

1: Gel membrane (gel layer) containing carbon dioxide carrier
2: Hydrophilic porous membrane
3, 4: Hydrophobic porous membrane
10: CO₂-facilitated transport membrane (membrane of the present invention)
11: Flow-through type gas permeable cell
12: Feed gas side chamber
13: Permeation side chamber
14, 16: Cooling trap
15, 19: Back pressure regulator
17: Gas chromatograph
18: Peristaltic pump
FG: Feed gas
SG, SG': Sweep gas

## Claims

1. A CO₂-facilitated transport membrane having CO₂/H₂ selectivity under a temperature condition of 100°C or higher; wherein
a gel layer which contains glycine and a deprotonating agent in a hydrogel membrane as additives is deposited onto a porous membrane having a heat resistance of 100°C or higher, the deprotonating agent used for preventing protonation of the amino group of the glycine.

2. The CO₂-facilitated transport membrane according to claim 1, wherein the deprotonating agent contains a hydroxide or carbonate of an alkaline metal element.

3. The CO₂-facilitated transport membrane according to claim 2, wherein the alkaline metal element contained in the deprotonating agent is any of potassium, cesium or rubidium.

4. The CO₂-facilitated transport membrane according to any one of claims 1 to 3, wherein the hydrogel membrane is a polyvinyl alcohol- polyacrylic acid salt copolymer gel membrane.

5. The CO₂-facilitated transport membrane according to any one of claims 1 to 4, wherein CO₂/H₂ selectivity as represented by a ratio of CO₂ permeance to H₂ permeance is 300 or more over at least a specific temperature range within a temperature range of 110°C to 140°C.

6. The CO₂-facilitated transport membrane according to any one of claims 1 to 5, wherein the porous membrane is a hydrophilic porous membrane.

7. The CO₂-facilitated transport membrane according to claim 6, wherein the gel layer deposited on the hydrophilic porous membrane is coated with and supported by a hydrophobic second porous membrane.

8. A production method of the CO₂-facilitated transport membrane according to any one of claims 1 to 7, comprising:
a step of producing a cast solution composed of an aqueous solution containing a polyvinyl alcohol-polyacrylic acid salt copolymer, a deprotonating agent containing an alkaline metal element, and glycine; and,
a step of producing a gel layer by casting the cast solution onto a porous membrane followed by drying.
